# EUROPEAN PATENT SPECIFICATION

(11) **EP 2 655 101 B1**
(45) Date of publication and mention of the grant of the patent: **09.09.2015**
(21) Application number: 11801702.9
(22) Date of filing: 15.12.2011
(51) Int. Cl.: B60C 23/00

(54) **TYRE INFLATION**
AUFPUMPEN VON REIFEN
GONFLAGE DE PNEUS

(30) Priority: 23.12.2010 GB 201021929; 30.09.2011 GB 201116851
(43) Date of publication of application: 30.10.2013
(73) Proprietor: AGCO International GmbH, 8212 Neuhausen am Rheinfall (CH)
(72) Inventor: HONZEK, Robert, 87647 Unterthingau OT Oberthingau (DE); MÜLLER, Thomas, 87616 Marktoberdorf (DE); STOIBER, Martin, 94522 Wallersdorf (DE); SCHMIDL, Konrad, 87672 Rosshaupten (DE); KRELL, Oliver, 87662 Kaltental (DE); STAEDELE, Alexander, 86899 Landsberg am Lech (DE)
(74) Representative: AGCO Intellectual Property Department
(86) International application number: PCT/EP2011/072935
(87) International publication number: WO 2012/084690

(56) References cited:
- DE-A1-102005 006 073
- FR-A1- 2 731 655
- US-A1- 2009 084 481

## Description

This invention relates to tyre inflation arrangement and in particular to such arrangements used on vehicles such as an agricultural tractors or the like.

On such vehicles it is necessary, in order to improve efficiency and safety, to change tyre pressures depending on whether, for example, the tractor is operating in field conditions or on the road. When operating in the field lower pressures are required to reduce ground pressure and compaction and to improve grip whereas on the road higher pressures are required to reduce rolling resistance (to improve economy) and to reduce heat generation (to improve safety).

US 2009/0084481, FR 2731655 and DE102005006073 disclose arrangements for controlling the air pressure within a tyre on a vehicle but does not disclose an arrangement in which a good seal between a rotatable and a non rotatable part can be ensured by decreasing the pressure on one side of the seal.

It is an object of the present invention to provide an improved form of tyre inflation feed arrangement which allows the efficient passage of air into the tyres and the release of air from the tyres when required ad which is reliable in operation and economical to operate in terms of the wear of the air sealing arrangements used.

Thus according to the present invention there is provided a tyre inflation feed arrangement for a tyre supported on a wheel carried by a rotatable support carried on a non-rotatable support, the feed arrangement comprising a first rotatable passage within the rotatable support extending from a first annular contact zone on the rotatable support for connection with the tyre, a first feed passage extending through the non-rotatable support to supply pressurised air to the first annular contact zone, first sealing means carried by the non-rotatable or rotatable support for co-operating with the rotatable or non-rotatable support or contact means carried thereby to seal the first feed passage to the first rotatable passage, the first sealing means being pressed into contact with its contacting component by the pressure in the first annular zone, and at least one chamber is provided outside the first sealing means, said at least one chamber connected to pressure adjustment means to adjust the pressure in the chamber to control the sealing contact of the first sealing means with the contacting component.

Advantageously, the pressure adjustment means comprises an evacuation and/or pressurisation means.

Alternatively, the pressure adjustment means may be connected to ambient pressure.

When the chamber is evacuated or de-pressurised the first sealing means can be fully sealed against the contacting component even when the pressure through the first passage is not high enough to fully push the sealing means against the contacting component to prevent leakage from the first feed passage.

The pressure difference on either side of the sealing means can be significant as the pressure in the chamber can be much lower than ambient pressure. As such the sealing means is subjected to a large force in the direction of the contacting component.

If the chamber is pressurised, the first sealing means can be lifted away from the contacting component to restore its form and even out any eversion that may have occurred whilst being sealed.

The evacuation means may comprise a vacuum pump or a flow of fluid perpendicular to a connection to the chamber. Preferably, the flow of fluid is provided by an air intake system.

Preferably, the evacuation means can be switched on before and during pressure build up in the first passage to ensure full sealing of the first seal means.

The pressurisation means may comprise a compressor, or a connection to another air guiding system providing the chamber with air at a pressure greater than that of ambient pressure. The air guiding system may be an air intake system.

Preferably, a valve means controls the evacuation and/or pressurisation of the chamber. Preferably, the evacuation means comprises a pressure sensor to sense the pressure between the pressure adjustment means and the chamber. More preferably, the pressure sensor is situated between the valve means and the chamber. In this way the pressure sensor can detect any leakage from the first passage by showing an increase or decrease in pressure.

Furthermore, the force applied to the sealing means can be adjusted by adjusting the amount of vacuum/pressurisation with a controllable source.

Moreover, dust and debris within the chamber can be actively discharged by evacuation or pressurisation of the chamber.

Preferably, the pressurised air is supplied generally radially between the housing and the first annular contact zone which is provided on the outer periphery of the axle and the chamber which is connected to pressure adjustment means is located on the axially outer side of the first sealing means.

More preferably, oil seal means are provided axially outwardly of the first sealing means to prevent the ingress oil and dirt around the axle and into an air flow, the chamber being provided between the oil seal means and the first sealing means.

The oil seal means may be provided radially outwardly and inwardly of the first sealing means to prevent the ingress oil and dirt into the air flow.

The feed arrangement may comprise a second passage which extends axially within the axle from a second outlet in the wheel flange to a second annular contact zone on the outer periphery of the axle and a second radial feed passage which extends through the axle housing to supply pressurised air to the second annular contact zone and second sealing means is carried by the housing or axle for co-operating with contact means carried by the axle, or housing to seal the second radial feed passage to the second axle passage.

Preferably, the first and second sealing means are located axially side by side and the chamber is connected to pressure adjustment means provided axially outward of the two sealing means. More preferably, the sealing means are mounted on a holding element.

Each sealing means may comprise a pair of axially spaced sealing members which are supported by support elements for supporting the sealing members against the pressure in the annular zone or zones, the holding element and support members forming a cartridge-like arrangement which encloses the sealing members.

The cartridge-like arrangement may also comprise oil seal means.

Alternatively, the pressurised air may be supplied generally axially between the housing and the first annular contact zone which is provided on an axially facing surface on the wheel flange and the chamber connected to pressure adjustment means provided on the radially outer and inner sides of the first sealing means.

Oil seal means are preferably provided radially outwardly and inwardly of the first sealing means to prevent the ingress oil and dirt into the air flow.

Preferably, a second passage extends from a second outlet in the wheel flange to a second annular contact zone on the axially facing surface on the wheel flange, a second housing feed passage extends through the axle housing to supply pressurised air to the second annular contact zone, and second sealing means is carried by the housing or the wheel flange for co-operating with contact means carried by the flange or housing to seal the second radial feed passage to the second axle passage.

The first and second sealing means may be located side by side and the chamber connected to pressure adjustment means is provided outward of the two sealing means and the sealing means may be mounted on a holding element.

Each sealing means preferably comprises a pair of spaced sealing members which are supported by support elements for supporting the sealing members against the pressure in the annular zone or zones, the holding element and support members forming a cartridge-like arrangement which encloses the sealing members.

The present invention will now be described, by way of example only, with reference to the accompanying drawings in which:-
Figure 1 shows an axial sectional view through half of a tractor rear axle fitted with a tyre inflation feed arrangement in accordance with the present invention,
Figure 2 shows a section through the rear axle of Figure 1 on a larger scale;
Figure 3 shows a sealing arrangement of figure 2 on a larger scale;
Figure 4 shows on a larger scale the area circled at X in Figure 3,
Figure 5 shows details of the external connection of the sealing arrangement to ambient pressure,
Figure 6 shows diagrammatically a sealing arrangement of the present invention in an axial tyre inflation feed arrangement,
Figure 7 shows the sealing arrangement of figure 3 connected to a circuit to provide an alternative sealing arrangement in accordance with the present invention, and
Figure 8 shows yet a further alternative sealing arrangement in accordance with the present invention.

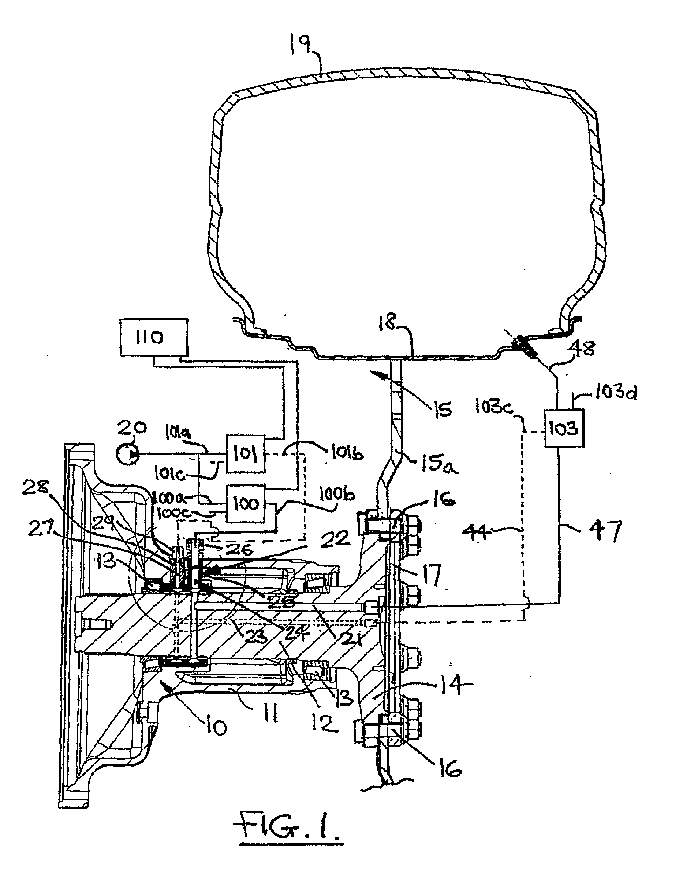

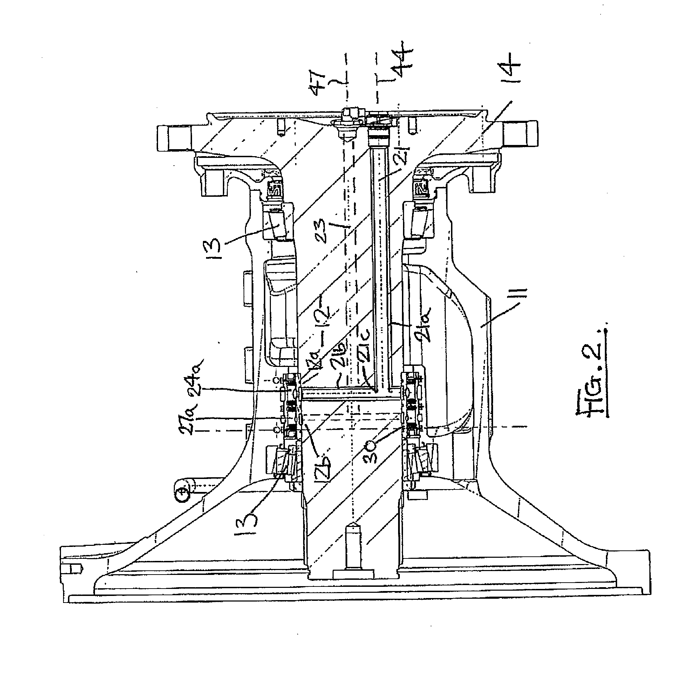

Referring to figures 1 to 6, a tractor rear axle 10, half of which is shown in cross-section in Figure 1 and 2, has an outer trumpet housing 11 within which a driveshaft 12 is supported by bearings 13. Driveshaft 12 terminates in a hub flange 14 to which a wheel disc 15a of a wheel 15 is clamped by bolts 16 and a clamping ring 17.

The wheel disc 15a carries a wheel rim 18 on which a pneumatic tyre 19 is mounted. The present invention is concerned with a tyre inflation feed arrangement 22 for conveying compressed air from a compressor 20 via air control valves 100 and 101 mounted on the tractor to the rotating wheel 15 and hence via an air control valve 103 mounted on the wheel to the interior of the tyre 19 via lines 47 and 48. Control valves 100 and 101 are solenoid control valves which are controlled by a control unit 110. These valves are 3/2 way control valves which open the air flow from intake lines 100a and 101a (connected to the compressor 20) to outlet lines 100b and 101b when activated by solenoid. When valves 100 and 101 are not activated intake lines 100a and 101a are closed and the outlet lines 100b and 101b are connected to the ambient discharge lines 100c and 101c.

Control valve 103 is a biased pressure controlled valve which opens the air flow from line 47 and thereby compressor 20 to line 48 and the interior of the tyre 19 when the control inlet 103c is charged with air via control line 44. In the non-activated condition of valve 103 line 47 is connected to the ambient discharge line 103d while the line 48 is blocked and line 47 is connected to the ambient discharge line 103d. Thereby, leakage in line 44, line 47 or the tyre inflation feed arrangement 22 would not cause unintentional deflation of the tyre.

The tyre inflation feed arrangement 22 comprises a first passage 21 in shaft 12 which extends within shaft 12 from flange 14 to a first annular axle zone 12a on the outer periphery of shaft 12 and a second passage 23 which also extends within shaft 12 from hub 14 to a second annular axle zone 12b on the outer periphery of shaft 12. First passage 21 is connected with line 47 and second passage 23 is connected with line 44. A first radial feed passage 24 is provided by a pipe 25 which extends through housing 11 and is provided with a pipe fitting 26 which connects passage 24 to line 100b. A second radial feed passage 27 is provided by a pipe 28 which also extends through housing 11 and is provided with a pipe fitting 29 which connects passage 27 to line 101b. Pipes 25 and 28 can be made from Stainless steel or brass or some other non-corroding material.

A contact means 30 surrounds annular zones 12a and 12b and is sealed to shaft 12 by seals 30a. This contact means is formed from or coated with plastics material such as PTFE or could be made from stainless steel or could be hardened by nitrogen to resist wear. Passages 21 and 23 emerge through contact means 30 in the vicinity of the inner ends of pipes 25 and 28. A first sealing means 31 seals the inner end of pipe 25 to the contact means 30 and a second sealing means 32 seals the inner end of pipe 28 to this contact means 30.

First sealing means 31 is supported within a holding element in the form of a surrounding casing 31a into which pipe 25 is screwed. Sealing means 31 includes a pair of seals 31b on either side of pipe 25 which, when pipe 25 is pressurised are forced into sealing contact with the contact member 30 to seal the flow of air from pipe 100b to passage 21 via first feed through chamber 24a. A shaft seal 31 c is also provided in casing 31 a to prevent the ingress of oil and dirt around axle 12.

Similarly, second sealing means 32 is also mounted in casing 31a into which pipe 28 is screwed. Sealing means 32 includes a pair of seals 32b are provided on either side of pipe 28 which, when pipe 28 is pressurised are forced into sealing contact with the contact member 30 to seal the flow of air from pipe 101b to passage 23 via a second feed through chamber 27a. A shaft seal 32c is also provided in casing 31a to prevent the ingress of oil and dirt around axle 12.

The two sealing means 31 and 32 are located side by side with shaft seals 31c and 32c axially outermost relative to the two annular axle zones 12a and 12b. A spacer 31e is built into casing 31a between the sealing means.

Use of a separate contact means 30 allows relatively easy replacement of the contact member if it becomes worn due to the contact pressure of sealing means 31 and 32 without the need for replacement of the expensive wheel flange 14 and associated shaft 12. The fact that the sealing means only make sealing contact with the contact member when their associated feed pipe is pressurised also helps to reduce wear of the contact means.

Although in the embodiment described the seals 31 and 32 are carried by housing 11 and the contact member 30 is mounted on shaft 12, this arrangement could be reversed if desired.

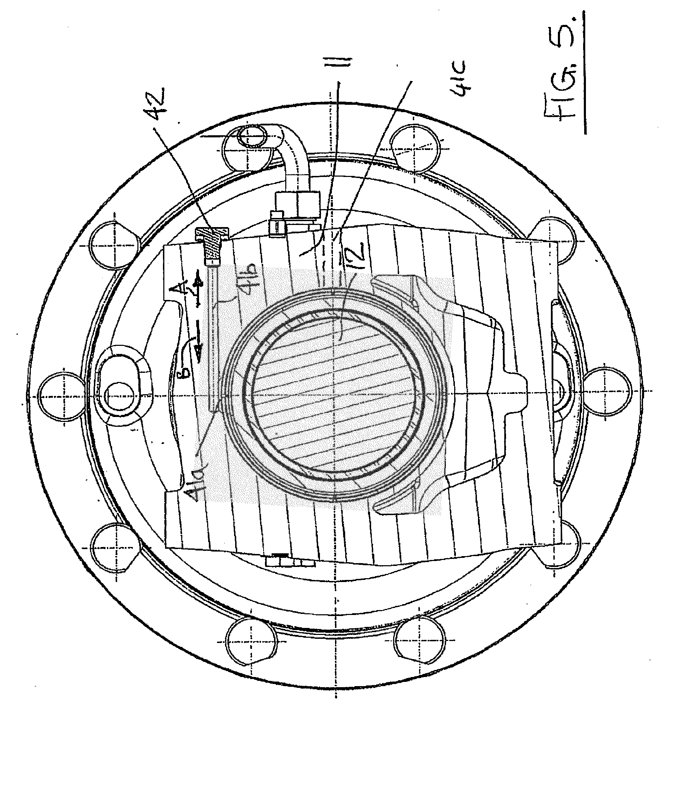

In figures 1 to 6 two chambers 40 are provided which are connected with the outside ambient pressure via passages 41a and 41b axially of the seals 31b and 32b. Passages 41 b exit to the outside of axle housing 11 via a screw-in diaphragm valve 42 which avoids debris entering passage 41 b in direction B but allows air and debris to exit the passage in direction A (see Figure5). Figure 5 also shows an alternative position of passage 41b by dashed lines 41c. The provision of chambers 40 connected to ambient air pressure ensure a high pressure differential between the feed through chambers 24a and 27a within seals 31b and 32b and the chambers 40 to in turn ensure that seals 31b and 32b are pressed hard against the contact means 30 when chambers 24a and 27a are pressurised thus preventing air leaks. In addition, the provision of chambers 40 prevents damage to the sealing arrangement if the seals means 31 and 32 (including seals31b,31c, 32b, 32c) of the tyre inflation feed arrangement 22 fail in operation. Without chambers 40 if Sealing means 31 and 32 were to fail air would then enter the cavity between shaft 12 and trumpet housing 11 increasing pressure inside the oil sump in which the axle rotates. At a certain pressure level, the bearings of shaft 12 may be damaged by debris carried by the air or the seals between shaft 12 and trumpet housing 11 (outwards towards the shaft bearings) The provision of chambers 40 connected to ambient air pressure ensure such damage will not occur.

To promote easy flow of air from chambers 40 to passages 41a and 41b the shaft seals 31a and 32c may be provided with radially extending grooves on their faces which contact seals 31b and 32b. Alternatively these radially extending grooves could be formed in the contacting surfaces of seals 31b and 32b.

Seals 31b is supported against high pressure in chamber 24a by a pair of axially spaced support elements 31 d which are bonded to casing 31a by the root portions 31e of rubbery-elastic abutment bodies 31f which extend between seals 31b and support elements 31d. Thus casing 31a and support elements 31 d form part of a cartridge-like arrangement which encloses the sealing members.

Similarly seals 32b is supported against high pressure in chamber 27a by a pair of axially spaced support elements 32d which are bonded to casing 31a by the root portions 32e of rubbery-elastic abutment bodies 32f which extend between seals 32b and support elements 32d. Thus casing 31a and support elements 32d again form part of a cartridge-like arrangement which encloses the sealing members.

Passage 21 needs to carry a large volume of air to inflate the tyre and such air can be damp. Thus passage 21 in axle 12, which is typically made from cast iron, can be lined with stainless steel tubes 21a and 21b. Tube 21a extending axially within axle 12 and having an end portion 21c which extends into the radially extending tube 21 b. By lining the passage 21 with tubes 21a and 21b corrosion of passage 21 is minimised. Also tube 21b can extend radially through contact means 30 to help locate the contact means relative to the axle. Passage 23 could also be lined with non-corrosive material although this is less important as less volume of air travels through passage 23.

The above described tyre inflation feed arrangement 22 operates as follows. To increase the air pressure in the tyre 19 control valve 100 is opened so that air from the compressor 20 is supplied to control valve 103 via pipe 25 and passage 21 to supply line 47. At the same time, the control inlet 103c of control valve 103 is charged with air via pipe 28 and passage 23, so that the passage to line 48 and the interior of the tyre 19 is open. Thereby, pressure in the tyre 19 is increased.

If it is desired to release some air pressure from within the tyre the control inlet 103c of control valve 103 is charged with air via control line 44 and pipe 28 so that supply line 47 and control valve 100 are connected to the line 48 and hence the interior of the tyre 19. As at the same time, valve 100 is switched into a position so that the outlet 100b is connected to the ambient discharge 100c, the interior of the tyre is thus connected to the ambient environment so the tyre pressure inside the tyre 19 is decreased.

In addition to locating the seals within the housing, the use of tubes 25 and 28 to define the feed passages 24 and 27 reduces corrosion and the manufacturing costs for the housing and the use of a cartridge-like seal arrangement within casing 31a also greatly simplifies seal installation.

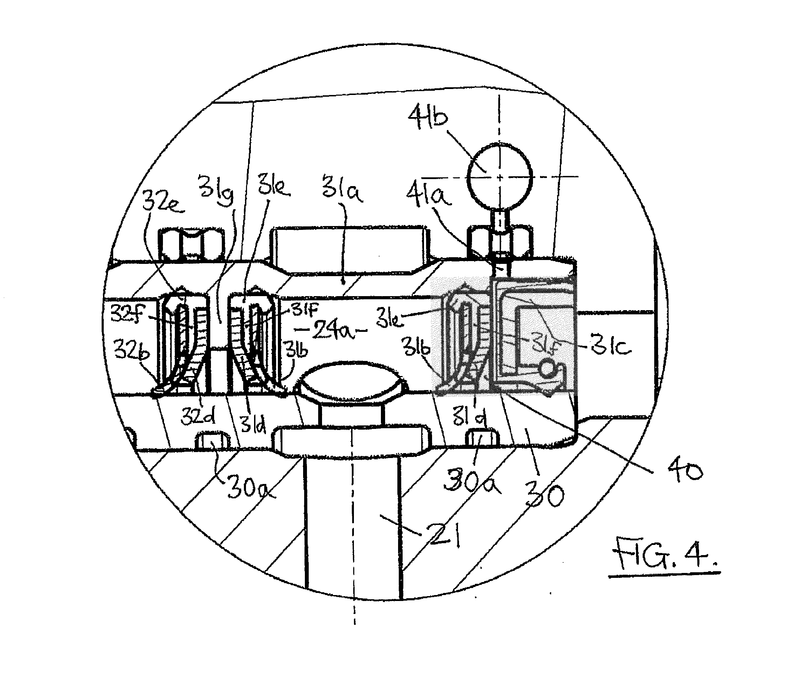

Although the invention has been described above in relation to an arrangement in which two feed-through chambers 24a and 27a are employed in a side by side configuration, the invention can be used in an installation which only requires a single feed-through chamber when, for example, the arrangement shown in Figure 4 could be used without spacer 31 g and with the left hand shaft seal 31c placed to the left of the left hand support element 31 d.

The embodiments shown above refer to a tyre inflation feed arrangement of a radial type which means that the passage between fixed and rotating part is mainly directed radially. Additionally, axial tyre inflation feed arrangement are known and e.g. described in applicants pending UK patent applications No. 1016662.7 and 1016661.9.

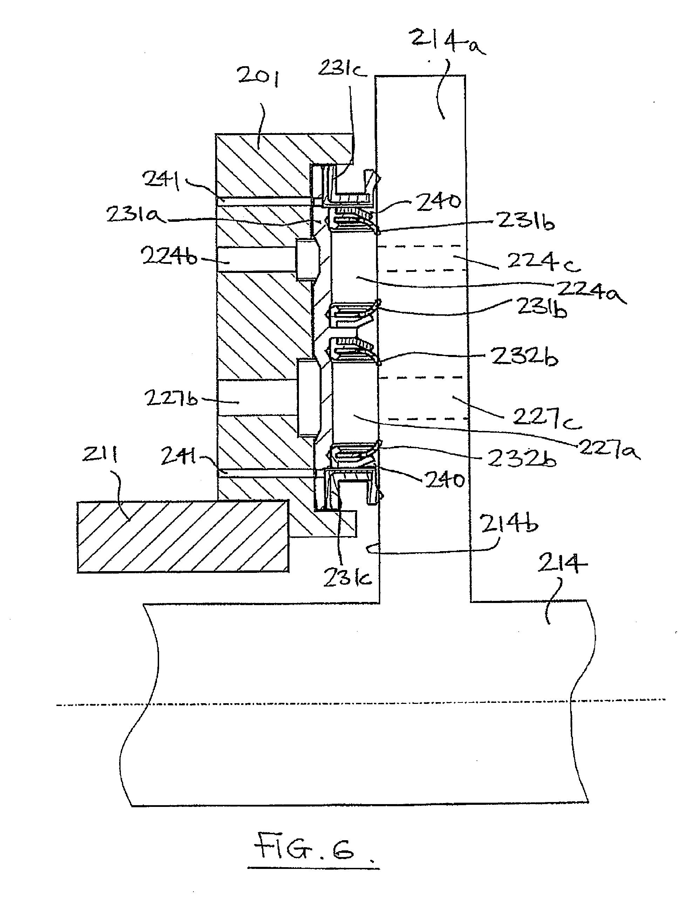

Figure 6 shows an alternative, axial tyre inflation feed arrangement in a diagrammatic manner. Shaft 214 is supported in trumpet housing 211. A feed arrangement support 201 is provided which is fixed to the housing 211 and carries a cartridge-like, press-fit annular casing 231 a in which the seals are arranged.

Two chambers 224a and 227a are formed by seals 231b and 232b which contact a mating surface 214b on a wheel flange 214a under pressure supplied to chambers 224a and 227a. The two chambers 224a and 227a are supplied via respective ducts 224b and 227b. Wheel mounting flange 214a is provided with respective ducts 224c and 227c to guide the air to the tyre which are mounted to the flange 214a. Details of the air supply system are similar to Figure 1 and therefore not described in detail.

On the radially outer and inner end of annular casing 231 a, debris seals 231c are provided. A chamber 240 is formed inbetween seals 231b, 232b and debris seals 231c at both ends. In a manner similar to the arrangement described above, these chambers 240 are connected to the ambient pressure by channels 241 via a screw-in diaphragm valve (not shown) similar to valve 42.

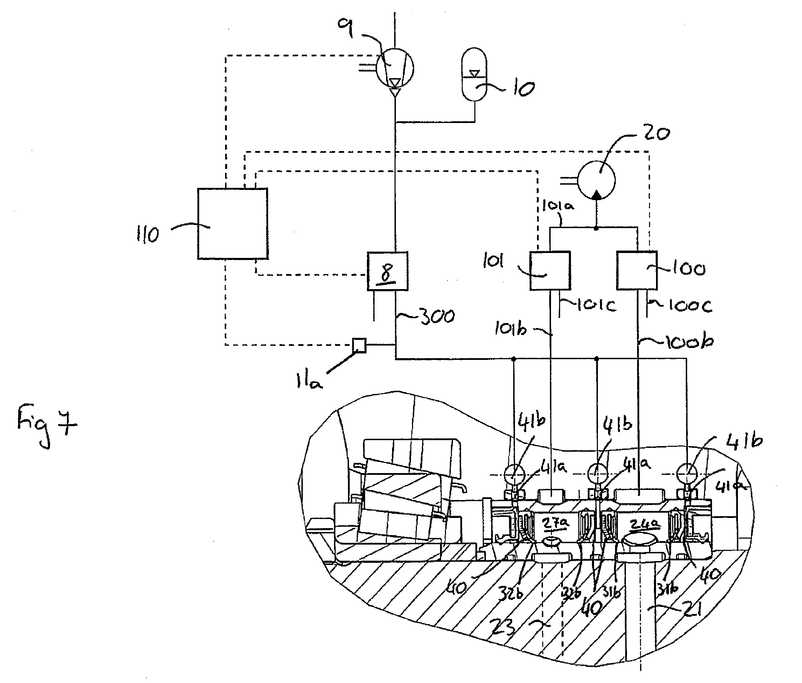

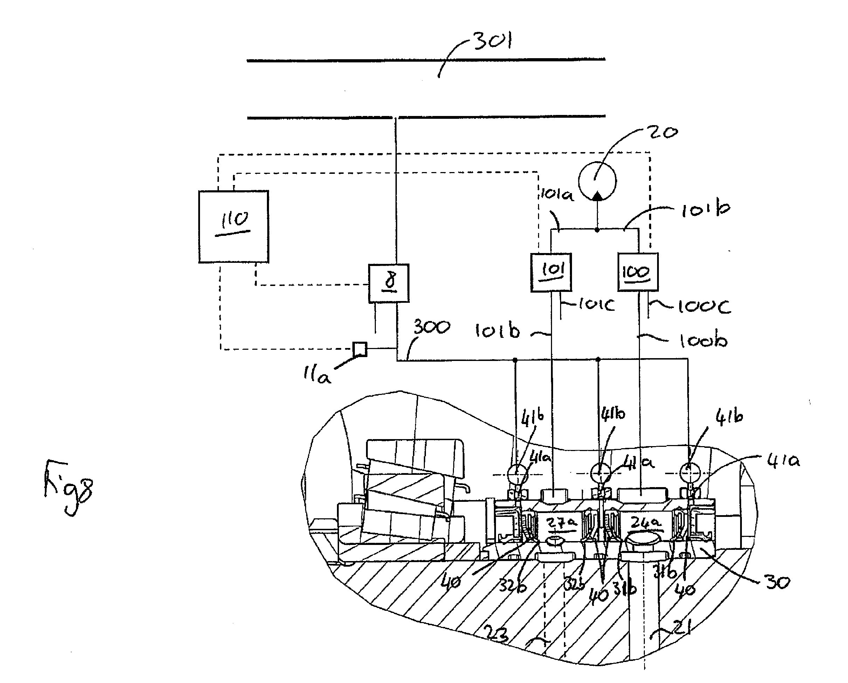

Figures 7 and 8 respectively show a radial tyre inflation feed arrangement having two further alternative sealing arrangements. The same reference numerals are used for the same parts as referenced in the earlier figures 1 to 6. In these two arrangements two chambers 40 axially outward of the seals 31b and 32b and one chamber 40 inbetween the seals 31b and 32b are connected to an evacuation means. By evacuation means it is meant any means that can reduce the pressure in the chambers 40 below that of ambient pressure. Such means may comprise a vacuum pump, for example.

The connection of chambers 40 to an evacuation means allows the pressure in the chambers 40 to be taken to below ambient pressure. As a result a higher pressure differential between the feed through chambers 24a and 27a within seals 31b and 32b and the chambers 40 can exist than with the previous described arrangement. This means that seals 31b and 32b are pulled back and sealed against the contact means 30 even when chambers 24a and 27a are not fully pressurised thus preventing air leak from passages 21,23 or chambers 24a, 27a.

This arrangement also allows small amounts of leakage to be detected owing to an increase of pressure detected in piping 300. Full sealing performance can be provided even if the pressure in the passages 21, 23 is not high enough to push seals 31b, 32b into sealing contact with contact means 30.

Compared to systems using ambient pressure, the pressure difference inbetween chambers 24a /27a and 40 is not limited by ambient pressure but depends on the vacuum source, the force applied to the seals can be adjusted and increased to ensure proper sealing function.

In figure 7 the evacuation means comprises a pump 9. Passages 41b are connected to a piping 300 which is connected to pump 9 and a vacuum reservoir 10. Therefore, the screw-in diaphragm valve 42 as shown in figure 5 would be replaced by a standard fitting to be connected with piping 300. Piping 300 is connected to pump 9 by an electrically controlled valve 8 which is controlled by the control unit 110. Additionally, piping 300 has a pressure sensor 11a connected to the control unit 110 as shown by the dotted lines. Before pressurising chambers 24a and 27a the control unit 110 activates pump 9 to evacuate piping 300 to a pressure below that of atmospheric pressure. The pressure in piping 300 is measured by sensor 11 a. Valve 8 is controlled so that chambers 40 are evacuated and the pressure in chambers 40 taken to below ambient pressure. This allow the air seals 31b, 32b to engage with contact means 30 and form a good seal. Chambers 24a, 27a and passages 21, 23 can then be pressurised without any leakage through the air seals. After pressurisation of passages 21, 23 the vacuum pump 9 may be switched off. The pressure in piping 300 is monitored by pressure sensor 11a. If the sensor shows that the pressure in piping 300 has increased since the evacuation it is an indication that leakage from passages 21,23 has occurred. If the pressure stays constant then no leakage has occurred. If a leakage is detected, the control unit 110 can stop all further operations associated with the inflation/deflation of the tyre and indicate a leakage as occurred to the driver. If leakage is detected, vacuum pump 9 may still be operated to overcome leakage, for example by the discharge of debris.

In figure 8 the evacuation means comprises a duct 301 in which clean air flows at right angles to piping 300. As with the arrangement in figure 7, passages 41b are connected to piping 300 which has a pressure sensor 11 a connected to the control unit 110 as shown by the dotted lines. Duct 301 may be, for example, a duct of the air intake system on the tractor. According to the Venturi principle air flowing along duct 301 will create a drop in pressure in piping 300 and in chambers 40. If chambers 24a and 27a are pressurised by opening valves 100, 101, valve 8 simultaneously or in advance opens the connection of the piping 300 to the duct 301 to provide a drop in pressure below that of ambient pressure in chambers 40. If valves 100 or 101 are closed, valve 8 closes the connection between duct 301 and piping 300 and chambers 40 are no longer evacuated allowing the seals 31b and 32b to retract from the sealing contact 30 and preventing unnecessary wear. Piping 300 is also provided with a pressure sensor 11a connected to the control unit 110 which can detect any leakages as described for the arrangement in figure 7.

Instead of a duct of an air intake system, the piping 300 may be connected to other air guiding systems found on the tractor such as air supply system for brakes, or air ducts in the tractor cab. Furthermore, the system may be driven by a vacuum source already installed on the vehicle for other purposes.

In the arrangements described in figures 7 and 8 above chambers 40 are evacuated or de-pressurised to suck the sealing into contact with the contacting component and discharge dust and debris. If the vacuum pump 9 of figure 7 is replaced by a compressor or piping 300 is not connected to the air duct 301 in a perpendicular manner but in alignment with duct 301, chambers 40 may be pressurised to a pressure greater than that of ambient pressure. This may be advantageous for several reasons:
- The seals 31b, 32b may be actively lifted from contact means 30 to restore their form and even out any eversion that may have occurred whilst being sealed.
- During assembly or when there are high pressure peaks in feedthrough chambers 24a and 27a seals 31b, 32b may be everted. By pressurising chambers 40, seals 31b, 32b may be forced to pivot into feedthrough chambers 24a,27a and any eversion or creasing may be unfolded. The pressure difference between chambers 24a and 27a and chamber 40 may be adjusted to optimise the force applied to the seals 31b, 32b. Leakage detection from passages 21, 23 can be detected by a change in pressure measured by pressure sensor 11 a after pressurisation has stopped. This is done in the same way as described earlier when the pressure in the chambers 40 is adjusted by evacuation means.

Both pressurisation and evacuation of the chambers discharge debris or dust from the seals 31b,32b.

Both, pressurisation and evacuation of the feedthrough chambers 24a, 27a may be used to detect leakage. Furthermore, detected leakage could be overcome by keeping the vacuum means active or adjusting the pressure in the chambers to improve discharge of debris interfering with the seals.

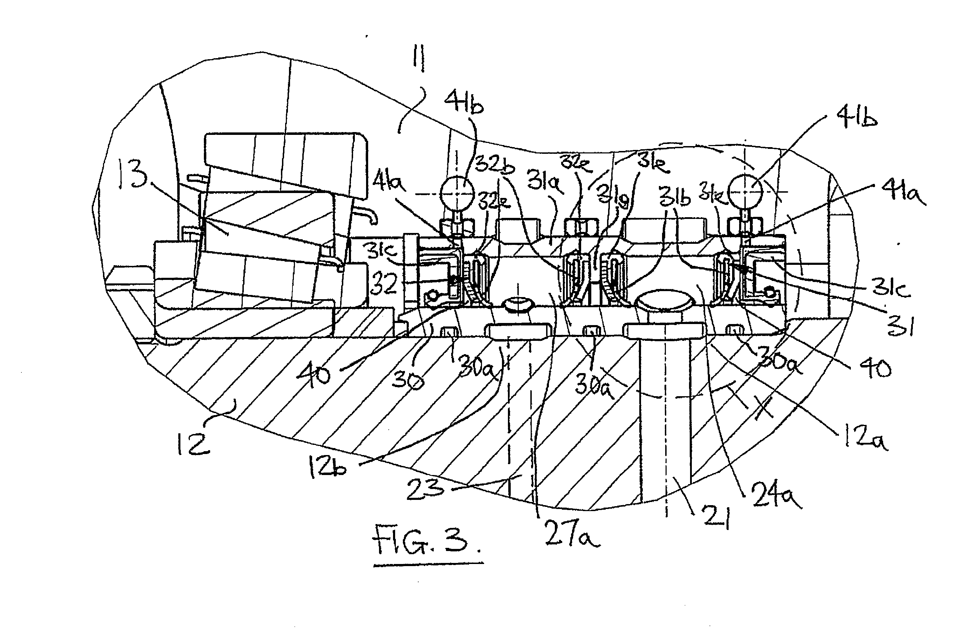

The detection of leakage is especially important to protect shaft seals 31c (see figure 3) which separate chambers 40 from feedthrough chambers 24a,27a. If leakage occurs the pressure in feedthrough chambers 24a, 27a may lift the seals away from the contacting component and thereby air would enter the oil sump of the axle housing. The result of this is that oil may be blown out of bearings 13, or debris may get into the oil.

## Claims

1. A tyre inflation feed arrangement (22) for a tyre (19) supported on a wheel carried by a rotatable support (12) carried on a non-rotatable support (11) the feed arrangement comprising a first rotatable passage (21) within the rotatable support (12) extending from a first annular contact zone (12a) on the rotatable support (12) for connection with the tyre, a first feed passage (24) extending through the non-rotatable support (11) to supply pressurised air to the first annular contact zone (12a), first sealing means (31) carried by the non-rotatable or rotatable support (11,12) for co-operating with the rotatable or non-rotatable support (12, 11) or contact means (30) carried thereby to seal the first feed passage (24) to the first rotatable passage (21), the first sealing means (31) being pressed into contact with its contacting component (30) by the pressure in the first annular zone (12a), and at least one chamber (40) provided outside the first annular zone (12a), **characterised in that** said at least one chamber (40) is connected to pressure adjustment means to adjust the pressure in the chamber (40) to control the sealing contact of the first sealing means (31) with the contacting component (30).

2. A tyre inflation feed arrangement as claimed in claim 1 wherein the pressure adjustment means comprises evacuation means (9,10).

3. A tyre inflation feed arrangement as claimed in claim 2 wherein the evacuation means (9,10) comprises a vacuum pump (9).

4. A tyre inflation feed arrangement as claimed in claim 2 wherein the evacuation means comprises a flow of fluid perpendicular to a connection to the chamber (40).

5. A tyre inflation feed arrangement as claimed in claim 1 or claim 2 wherein the pressure adjustment means comprises pressurisation means.

6. A tyre inflation feed arrangement as claimed in claim 5 wherein the pressurisation means comprises a compressor.

7. A tyre inflation feed arrangement according to claim 5 wherein the pressurisation means comprises a flow of fluid connected to the chamber (40).

8. A tyre inflation feed arrangement as claimed in claim 4 or claim 7 wherein the flow of fluid is provided by an air intake system.

9. A tyre inflation feed arrangement (22) as claimed in claim 1 wherein the pressure adjustment means is connected to ambient pressure.

10. A tyre inflation feed arrangement (22) as claimed in any preceding claim wherein a valve means 8 controls the pressure of the chamber (40).

11. A tyre inflation feed arrangement according to any preceding claim in which a second passage (23) extends within the rotatable support (12) from a second annular contact zone (12b) on the rotatable support (12) for connection with the tyre, a second feed passage (27) extends through the non-rotatable support (11) to supply pressurised air to the second annular contact zone (12b), and a second sealing means (32) is carried by the non-rotatable support (11) or rotatable support (12) for co-operating with the contact means (30) to seal the second feed passage (27) to the second passage (23).

12. A tyre inflation feed arrangement according to claim 11 in which the first (31) and second sealing means (32) are located axially side by side and the at least one chamber (40) is connected to pressure adjustment means provided axially outward of the two sealing means (31, 32).

13. A tyre inflation feed arrangement according to claim 11 or claim 12 in which first and second sealing means (31,32) comprise a pair of axially spaced sealing members (31b,32b) which are supported by support elements (32d) for supporting the sealing members (31b,32b) against the pressure in the annular zones (12a,12b), the holding element (31a) and support elements (32d) forming a cartridge-like arrangement which encloses the sealing members (31b,32b).

14. A tyre inflation feed arrangement as claimed in any preceding claim wherein the rotatable support (12) is a drive shaft and the non-rotatable support (11) is a trumpet housing.

## Patentansprüche

1. Reifenaufblas-Versorgungsvorrichtung (22) für einen Reifen (19), der auf einem Rad abgestützt ist, das von einem drehbaren Stützelement (12) getragen wird, das auf einem nicht drehbaren Stützelement (11) getragen wird, wobei die Versorgungsvorrichtung innerhalb des drehbaren Stützelements (12) einen ersten drehbaren Durchlass (21), der sich von einer ersten ringförmigen Kontaktzone (12a) auf dem drehbaren Stützelement (12) zur Verbindung mit dem Reifen erstreckt, einen ersten Versorgungs-Durchlass (24), der sich durch das nicht drehbare Stützelement (11) erstreckt, um Druckluft an der ersten ringförmigen Kontaktzone (12a) zur Verfügung zu stellen, ein erstes Dichtmittel (31), das auf dem nicht drehbaren oder dem drehbaren Stützelement (11, 12) getragen ist und dem Zusammenwirken mit dem drehbaren oder nicht drehbaren Stützelement (12, 11) oder einem Kontaktmittel (30), die darauf getragen ist, dient, um den ersten Versorgungs-Durchlass (24) gegenüber dem ersten drehbaren Durchlass (21) abzudichten, wobei das erste Dichtmittel (31) durch den Druck in der ersten ringförmigen Zone (12a) mit seiner Kontaktkomponente (30) in Kontakt gepresst wird, und mindestens eine Kammer (40), die außerhalb der ersten ringförmigen Zone (12a) vorgesehen ist, aufweist, **dadurch gekennzeichnet, dass** die mindestens eine Kammer (40) mit einem Druckanpassungsmittel verbunden ist, um den Druck in der Kammer (40) anzupassen, um den dichtenden Kontakt des ersten Dichtmittels (31) mit der Kontaktkomponente (30) zu steuern.

2. Reifenaufblas-Versorgungsvorrichtung nach Anspruch 1, wobei das Druckanpassungs-mittel ein Evakuierungsmittel (9, 10) aufweist.

3. Reifenaufblas-Versorgungsvorrichtung nach Anspruch 2, wobei das Evakuierungsmittel (9, 10) eine Vakuumpumpe (9) aufweist.

4. Reifenaufblas-Versorgungsvorrichtung nach Anspruch 2, wobei das Evakuierungsmittel einen Fluss eines Fluids senkrecht zu einer Verbindung mit der Kammer (40) aufweist.

5. Reifenaufblas-Versorgungsvorrichtung nach Anspruch 1 oder Anspruch 2, wobei das Druckanpassungsmittel ein Druckerzeugungsmittel aufweist.

6. Reifenaufblas-Versorgungsvorrichtung nach Anspruch 5, wobei das Druckerzeugungs-mittel einen Kompressor aufweist.

7. Reifenaufblas-Versorgungsvorrichtung nach Anspruch 5, wobei das Druckerzeugungs-mittel einen Fluss eines Fluids aufweist, der mit der Kammer (40) verbunden ist.

8. Reifenaufblas-Versorgungsvorrichtung nach Anspruch 4 oder Anspruch 7, wobei der Fluss des Fluids durch ein Lufteinlasssystem zur Verfügung gestellt wird.

9. Reifenaufblas-Versorgungsvorrichtung (22) nach Anspruch 1, wobei das Druckanpassungsmittel mit dem Umgebungsdruck verbunden ist.

10. Reifenaufblas-Versorgungsvorrichtung (22) nach einem der vorhergehenden Ansprüche, wobei ein Ventilmittel (8) den Druck der Kammer (40) steuert oder regelt.

11. Reifenaufblas-Versorgungsvorrichtung nach einem der vorhergehenden Ansprüche, in der sich innerhalb des drehbaren Stützelements (12) von einer zweiten ringförmigen Kontaktzone (12b) auf dem drehbaren Stützelement (12) ein zweiter Durchlass (23) zur Verbindung mit dem Reifen erstreckt, sich ein zweites Versorgungs-Durchlass (27) durch das nicht drehbare Stützelement (11) erstreckt, um Druckluft der zweiten ringförmigen Kontaktzone (12b) zuzuführen, und ein zweites Dichtmittel (32) auf dem nicht drehbaren Stützelement (11) oder dem drehbaren Stützelement (12) getragen wird, um mit dem Kontaktmittel (30) zusammenzuwirken, um den zweiten Versorgungs-Durchlass (27) gegenüber dem zweiten Durchlass (23) abzudichten.

12. Reifenaufblas-Versorgungsvorrichtung nach Anspruch 11, wobei das erste (31) und das zweite Dichtmittel (32) axial Seite an Seite angeordnet sind und die mindestens eine Kammer (40) mit dem Druckanpassungsmittel verbunden ist, welches axial außerhalb der beiden Dichtmittel (31, 32) zur Verfügung gestellt ist.

13. Reifenaufblas-Versorgungsvorrichtung nach Anspruch 11 oder Anspruch 12, wobei das erste und ein zweite Dichtmittel (31, 32) ein Paar von axial beabstandet angeordneten Dichtelementen (31 b, 32b) aufweisen, die durch Stützelemente (32d) zum Stützen der Dichtelemente (31 b, 32b) gegen den Druck in den ringförmigen Zonen (12a, 12b) abgestützt sind, wobei das Halteelement (31 a) und die Stützelemente (32d) eine hülsenartige, behälterartige oder kartuschenartige Anordnung bilden, die die Dichtelemente (31 b, 32b) umschließt.

14. Reifenaufblas-Versorgungsvorrichtung nach einem der vorhergehenden Ansprüche, wobei das drehbare Stützelement (12) eine Antriebswelle ist und das nicht drehbare Stützelement (11) ein Gehäuse, Untersetzungsgehäuse oder haubenartiges Gehäuse ist.

## Revendications

1. Agencement d'alimentation de gonflage de pneu (22) pour un pneu (19) supporté sur une roue maintenue par un support pouvant tourner (12) monté sur un support ne pouvant pas tourner (11), l'agencement d'alimentation comprenant un premier passage pouvant tourner (21) à l'intérieur du support pouvant tourner (12) s'étendant à partir d'une première zone de contact annulaire (12a) sur le support pouvant tourner (12) de manière à assurer une liaison avec le pneu, un premier passage d'alimentation (24) s'étendant à travers le support ne pouvant pas tourner (11) de manière à délivrer de l'air comprimé dans la première zone de contact annulaire (11a), un premier moyen d'étanchéité (31) maintenu par le support ne pouvant pas tourner ou pouvant tourner (11, 12) de manière à coopérer avec le support pouvant tourner ou ne pouvant pas tourner (12, 11) ou le moyen de contact (30) supporté afin d'assurer ainsi l'étanchéité du premier passage d'alimentation (24) sur le premier passage pouvant tourner (21), le premier moyen d'étanchéité (31) étant pressé en contact avec son composant de contact (30) par la pression dans la première zone annulaire (12a), et au moins une chambre (40) agencée à l'extérieur de la première zone annulaire (12a) **caractérisé en ce que** ladite au moins une chambre (40) est reliée à un moyen de réglage de pression afin de régler la pression dans la chambre (40) de manière à commander le contact d'étanchéité du premier moyen d'étanchéité (31) avec le composant de contact (30).

2. Agencement d'alimentation de gonflage de pneu selon la revendication 1, dans lequel le moyen de réglage de pression comprend un moyen d'évacuation (9, 10).

3. Agencement d'alimentation de gonflage de pneu selon la revendication 2, dans lequel le moyen d'évacuation (9, 10) comprend une pompe à vide (9).

4. Agencement d'alimentation de gonflage de pneu selon la revendication 2, dans lequel le moyen d'évacuation comprend un écoulement de fluide perpendiculaire à un raccordement à la chambre (40).

5. Agencement d'alimentation de gonflage de pneu selon la revendication 1 ou 2, dans lequel le moyen de réglage de pression comprend un moyen de pressurisation.

6. Agencement d'alimentation de gonflage de pneu selon la revendication 5, dans lequel le moyen de pressurisation comprend un compresseur.

7. Agencement d'alimentation de gonflage de pneu selon la revendication 5, dans lequel le moyen de pressurisation comprend un écoulement de fluide raccordé à la chambre (40).

8. Agencement d'alimentation de gonflage de pneu selon la revendication 4 ou 7, dans lequel l'écoulement de fluide est assuré par un dispositif d'admission d'air.

9. Agencement d'alimentation de gonflage de pneu (22) selon la revendication 1, dans lequel le moyen de réglage de pression est raccordé à la pression atmosphérique.

10. Agencement d'alimentation de gonflage de pneu (22) selon l'une quelconque des revendications précédentes, dans lequel un moyen formant vanne (8) commande la pression de la chambre (40).

11. Agencement d'alimentation de gonflage de pneu selon l'une quelconque des revendications précédentes, dans lequel un second passage (23) s'étend à l'intérieur du support pouvant tourner (12) à partir d'une seconde zone de contact annulaire (12b) sur le support pouvant tourner (12) afin d'assurer la liaison avec le pneu, un second passage d'alimentation (27) s'étend à travers le support ne pouvant pas tourner (11) afin de délivrer de l'air comprimé à la seconde zone de contact annulaire (12b), et un second moyen d'étanchéité (32) est supporté par le support ne pouvant pas tourner (11) ou le support pouvant tourner (12) afin de coopérer avec le moyen de contact (30) de manière à assurer l'étanchéité du second passage d'alimentation (27) sur le second passage (23).

12. Agencement d'alimentation de gonflage de pneu selon la revendication 11 dans lequel les premier (31) et second moyens d'étanchéité (32) sont situés axialement côte à côte et la au moins une chambre (40) est raccordée à un moyen de réglage de pression agencé axialement à l'extérieur des deux moyens d'étanchéité (31, 32).

13. Agencement d'alimentation de gonflage de pneu selon la revendication 11 ou 12, dans lequel les premier et second moyens d'étanchéité (31, 32) comprennent une paire d'éléments d'étanchéité espacés axialement (31b, 32b) qui sont supportés par des éléments de support (32d) afin de supporter les éléments d'étanchéité (31b, 32b) contre l'effet de la pression dans les zones annulaires (12a, 12b), l'élément de retenue (31a) et les éléments de support (32d) formant un agencement du type en cartouche qui renferme les éléments d'étanchéité (31b, 32b).

14. Agencement d'alimentation de gonflage de pneu selon l'une quelconque des revendications précédentes, dans lequel le support pouvant tourner (12) est un arbre d'entraînement et le support ne pouvant pas tourner (11) est un logement en cornet.
